# FASCICULE DE BREVET EUROPEEN

(11) **EP 4 217 219 B1**
(45) Date de publication et mention de la délivrance du brevet: **04.09.2024**
(21) Numéro de dépôt: 21755802.2
(22) Date de dépôt: 23.07.2021
(51) Int. Cl.: B60K 11/04, F16F 15/08

(54) **SYSTEME DE FIXATION SUPERIEURE D'UN MODULE VIBRANT A UN ELEMENT DE STRUCTURE, PAR EXEMPLE DANS UN VEHICULE**
SYSTEM ZUR OBEREN BEFESTIGUNG EINES VIBRATIONSMODULS AN EINEM STRUKTURELEMENT, ZUM BEISPIEL IN EINEM FAHRZEUG
SYSTEM FOR UPPER ATTACHMENT OF A VIBRATING MODULE TO A STRUCTURAL ELEMENT, FOR EXAMPLE IN A VEHICLE

(30) Priorité: 23.09.2020 FR 2009665
(43) Date de publication de la demande: 02.08.2023
(73) Titulaire: A. Raymond et Cie, 38000 Grenoble (FR)
(72) Inventeur: MAURY, Paul, MOIRANS 38430 (FR)
(74) Mandataire: IP Trust
(86) Numéro de dépôt international: PCT/FR2021/051379
(87) Numéro de publication internationale: WO 2022/064117

(56) Documents cités:
- EP-A1- 1 067 005
- FR-A1- 2 812 266
- US-A1- 2019 061 512

## Description

### DOMAINE DE L'INVENTION

La présente invention concerne le domaine des fixations, en particulier pour les applications automobiles. Elle concerne en particulier un système de fixation supérieure d'un module vibrant à un élément de structure, notamment adapté à la fixation d'un module de refroidissement à une façade avant technique de véhicule.

### ARRIERE PLAN TECHNOLOGIQUE DE L'INVENTION

Dans un véhicule automobile, des broches en partie supérieure du module de refroidissement (lequel module inclut typiquement un condenseur, un radiateur, un ventilateur) sont solidarisées à un élément de structure de la façade avant technique, par des systèmes de fixation supérieure. Le module de refroidissement, au niveau de sa partie inférieure, est par ailleurs disposé sur une pièce du châssis solidaire de la façade avant technique, par le biais d'un élément amortissant en matériau élastique. Un plot en matériau élastique est également intercalé entre le système de fixation supérieure et la broche du module de refroidissement ; l'élément amortissant et le plot élastique sont aptes à amortir les vibrations générées par le module de refroidissement lorsque le véhicule est en fonctionnement. Au-delà de la présence de ces amortisseurs, il est important que tout l'empilement de pièces entre l'élément de structure et la pièce du châssis demeure en contact étroit pour éviter une amplification des vibrations et du bruit associé, lors du fonctionnement du véhicule et pendant toute sa durée de vie. Les jeux et variations de tolérance des pièces peuvent notamment mettre à mal le contact étroit recherché.

A cet effet, le document US2019061512 propose un système de support supérieur formé d'une première partie et d'une seconde partie s'étendant perpendiculairement à la première. La première partie comprend un trou de forage pour fixer le système de support à l'élément de structure du véhicule. La seconde partie comprend une ouverture présentant un filetage intérieur, ladite ouverture accueille un isolateur élastomère (plot élastique), lequel entoure la broche de la partie supérieure du radiateur. Un support universel peut être vissé sélectivement à une profondeur requise dans l'ouverture. Ainsi, ce système de support supérieur permet d'ajuster l'espace entre le haut du radiateur et le fond de l'isolateur élastomère pour répondre à la variation de tolérance des composants d'accouplement. Ledit système empêche ainsi des vibrations excessives qui pourraient provoquer des problèmes de bruit et de durabilité.

### OBJET DE L'INVENTION

La présente invention propose une solution alternative à celle de l'état de la technique, qui vise à résoudre tout ou partie des problèmes précités. L'invention concerne un système de fixation supérieure d'un module vibrant à un élément de structure, autorisant une compensation d'écart dans une position de verrouillage ; ledit système est particulièrement adapté à la fixation d'un module de refroidissement à une façade avant technique de véhicule.

### BREVE DESCRIPTION DE L'INVENTION

L'invention concerne un système de fixation supérieure d'un module vibrant sur un élément de structure, comprenant :
- un support comportant une première portion s'étendant selon un plan principal et destinée à être accouplée à une broche du module vibrant, et une deuxième portion destinée à être solidarisée à l'élément de structure, la première portion présentant une première ouverture d'axe central et la deuxième portion présentant une deuxième ouverture,
- un logement comportant un corps central de forme générale cylindrique, une tête supérieure et une collerette inférieure, le corps central étant disposé dans la première ouverture et étant destiné à accueillir la broche entourée d'un plot amortisseur, une première face de la collerette étant en contact contre une face inférieure de la première portion, lesdites faces présentant des plans inclinés complémentaires,
- un verrou solidaire de la tête supérieure et établissant un contact avec une face supérieure de la première portion.

Le système de fixation est apte à adopter deux positions :
- une position de livraison dans laquelle le verrou est à une première altitude, selon l'axe central, par rapport à la face supérieure de la première portion du support, et
- une position de verrouillage, lorsque le verrou effectue une rotation autour de l'axe central, dans laquelle le verrou est à une deuxième altitude inférieure à la première altitude, du fait de la coopération entre les plans inclinés complémentaires.

Le système de fixation supérieure selon l'invention permet, après solidarisation sur la broche du module vibrant et sur l'élément de structure, d'adopter une position de verrouillage dans laquelle il vient comprimer le plot amortisseur et compenser d'éventuels jeux dans l'empilement des pièces à solidariser : cela assure un maintien en étroit contact desdites pièces selon l'axe z.

Selon d'autres caractéristiques avantageuses et non limitatives de l'invention, prises seules ou selon toute combinaison techniquement réalisable :
- Le système de fixation comprend une bague disposée dans la deuxième ouverture ;
- le verrou comprend un organe central fixé sur la tête supérieure du logement par clippage ;
- le verrou comprend un organe central emmanché dans un orifice hexagonal de la tête supérieure du logement, de manière à supporter le couple de verrouillage lorsque le verrou effectue une rotation pour passer de la position de livraison à la position de verrouillage ;
- le verrou comprend un volet configuré pour bloquer l'accès à la deuxième ouverture en position de verrouillage ;
- le verrou comprend des pattes flexibles via lesquelles il établit le contact avec la face supérieure de la première portion ;
- le corps central du logement comprend des bras flexibles s'étendant selon l'axe central et aptes à fléchir radialement ;
- la première face de la collerette et la face inférieure de la première portion comportent respectivement des encoches et des pions complémentaires, pour stabiliser les positions de livraison et de verrouillage ;
- le support comprend des premières butées de fin de course configurées pour coopérer avec des deuxièmes butées portées par le logement et/ou par le verrou, de manière à limiter la rotation entre la position de livraison et la position de verrouillage ;
- le support, le logement et le verrou sont formés dans une matière plastique, par exemple du polyamide PA66 ;
- la matière plastique formant le support et le logement est chargée en fibres de verre.

L'invention concerne en outre un ensemble de fixation pour le maintien en partie supérieure d'un module vibrant sur un élément de structure, comprenant deux systèmes de fixation supérieure tels que ci-dessus, et dans lequel :
- les deux supports sont symétriques par rapport à un plan normal au plan principal,
- les deux logements et les deux verrous sont identiques.

### BREVE DESCRIPTION DES FIGURES

D'autres caractéristiques et avantages de l'invention ressortiront de la description détaillée de l'invention qui va suivre en référence aux figures annexées sur lesquelles :
[Fig. 1] La figure 1 présente un système de fixation supérieure, en vue éclatée et en vue assemblée ;
[Fig. 2] La figure 2 présente un système de fixation supérieure conforme à la présente invention, (a) en cours de solidarisation sur une broche de module vibrant, et (b) solidarisé sur ladite broche et sur un élément de structure ;
[Fig. 3] La figure 3 présente un ensemble de fixation comprenant deux systèmes de fixation conformes à l'invention ;
[Fig. 4] La figure 4 présente un système de fixation conforme à l'invention, en cours de solidarisation sur une broche de module vibrant, avec un plot amortisseur intercalé entre le système et la broche ;
[Fig. 5] La figure 5 présente un agrandissement d'un système de fixation conforme à l'invention ;
[Fig. 6] La figure 6 présente un logement et un verrou d'un système de fixation conforme à l'invention, seuls et solidaires l'un de l'autre ;
[Fig. 7] La figure 7 présente des vues du système de fixation conforme à l'invention, dans une position de livraison P1 et dans une position de verrouillage P2 ;
[Fig. 8] La figure 8 présente un agrandissement d'un système de fixation conforme à l'invention.

Dans la partie descriptive, les mêmes références sur les figures pourront être utilisées pour des éléments de même type.

Les différentes possibilités (variantes et modes de réalisation illustrés et/ou détaillés dans la description à suivre) doivent être comprises comme n'étant pas exclusives les unes des autres et peuvent se combiner entre elles.

### DESCRIPTION DETAILLEE DE L'INVENTION

La présente invention concerne un système de fixation supérieure 1 d'un module vibrant sur un élément de structure. Comme évoqué en introduction, le module vibrant peut être un module de refroidissement d'un moteur de véhicule, incluant notamment un radiateur et un ventilateur. L'élément de structure fait dans ce cas partie de la façade avant technique du véhicule. Bien sûr l'invention n'est pas limitée à cette application et pourra trouver une utilisation dans tout domaine ou configuration nécessitant un système de fixation supérieure entre un module vibrant et un élément de structure.

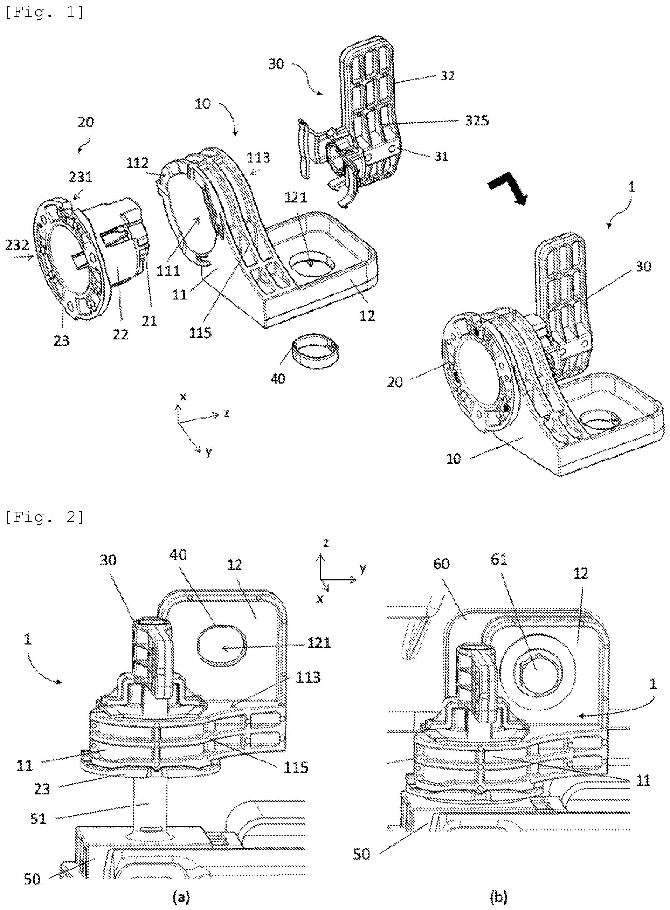

Le système de fixation supérieure 1 comprend un support 10, un logement 20 et un verrou 30, illustrés sur la figure 1 sous forme individuelle et assemblés. De manière générale, ces trois pièces du système de fixation 1 coopèrent entre elles pour solidariser une broche 51 du module vibrant 50 et l'élément de structure 60 (figure 2).

Avantageusement, le support 10, le logement 20 et le verrou 30 sont formés dans une matière plastique, par exemple du polyamide PA66. Pour renforcer la tenue mécanique, la matière plastique formant le support 10 et le logement 20 peut optionnellement être chargée en fibres de verre, ce qui est par exemple le cas du polyamide PA66 GF50.

Le support 10, le logement 20 et le verrou 30 sont préférentiellement fabriqués par injection. Avec une telle méthode d'élaboration, il est favorable de concevoir les pièces de sorte qu'elles présentent des épaisseurs de plastique aussi homogènes et constantes que possible, pour permettre un refroidissement uniforme et une bonne intégrité et solidité de la pièce. Des renforts mécaniques 115, 325 sont prévus notamment sous forme de rainures, comme par exemple illustré sur les figures 1 et 2.

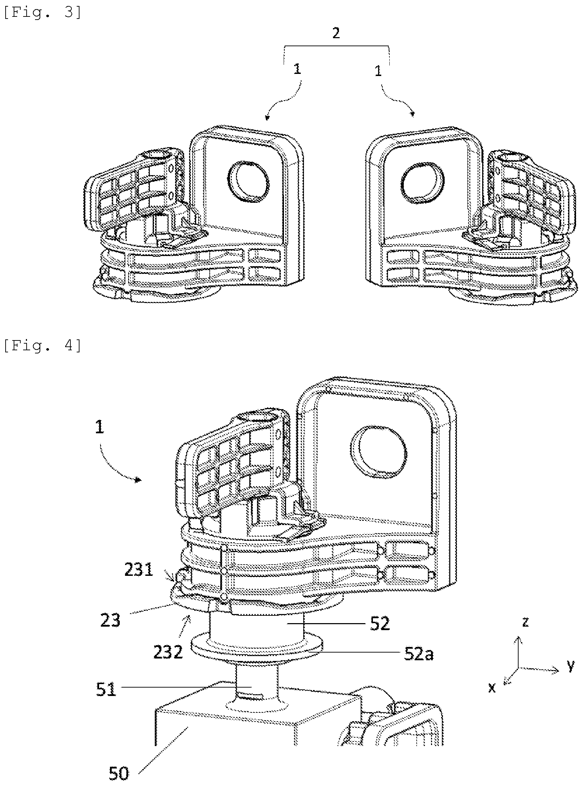

Habituellement, le module vibrant 50 est maintenu au niveau de deux broches 51 disposées d'un côté et de l'autre de sa face supérieure. Un ensemble de fixation 2 pour le maintien du système vibrant 50 est donc constitué de deux systèmes de fixation supérieure 1, dans lesquels les deux supports 10 sont symétriques par rapport à un plan normal au plan principal (x,y) ; les deux logements 20 et les deux verrous 30 sont quant à eux identiques (figure 3). Cela favorise la rationalisation des types de pièces nécessaires pour cet ensemble de fixation 2.

Revenant à la description du système de fixation 1, le support 10 comporte une première portion 11 s'étendant selon un plan principal (x,y) et destinée à être accouplée à la broche 51 du module vibrant 50 ; cette première portion 11 présente une première ouverture 111 d'axe central z. Le support 10 comporte également une deuxième portion 12 destinée à être solidarisée à l'élément de structure 60. La deuxième portion 12 présente une deuxième ouverture 121.

Une bague 40, par exemple en acier, est préférentiellement disposée dans la deuxième ouverture 121 de manière à renforcer la tenue mécanique du support 10 aux efforts de serrage, lors de la solidarisation de la deuxième portion 12 sur l'élément de structure 60 (figure 2). Cette solidarisation se fait habituellement au moyen d'un ensemble vis / rondelle / écrou.

La deuxième ouverture 121 présente avantageusement une forme oblongue, plus large que le diamètre de la vis, pour compenser les tolérances dimensionnelles et le positionnement relatif du module vibrant 50 et de l'élément de structure 60. Par exemple, on pourra définir la deuxième ouverture 121 de manière à accommoder une incertitude de centrage vis-à-vis du trou de l'élément de structure 60 de +/-4mm à +/-5mm selon l'axe y, et de +/-2mm à +/-3mm selon l'axe z.

Le logement 20 du système de fixation 1 comporte un corps central 22 de forme générale cylindrique et, de part et d'autre dudit corps 22, une tête supérieure 21 et une collerette inférieure 23 (figure 1). Le corps central 22 est disposé dans la première ouverture 111 de la première portion 11 du support 10. Il est destiné à accueillir la broche 51 entourée d'un plot amortisseur 52. Sur la figure 4, on peut voir le plot amortisseur 52 prêt à s'engager dans le corps central 22 du côté de la collerette inférieure 23. Le plot est par ailleurs emmanché en force sur la broche 51 du module vibrant 50. Il est formé en matière élastique (par exemple en caoutchouc) et présente un collet inférieur 52a qui sera disposé entre une face 232 (appelée deuxième face 232) de la collerette 23 et la face supérieure du module vibrant 50.

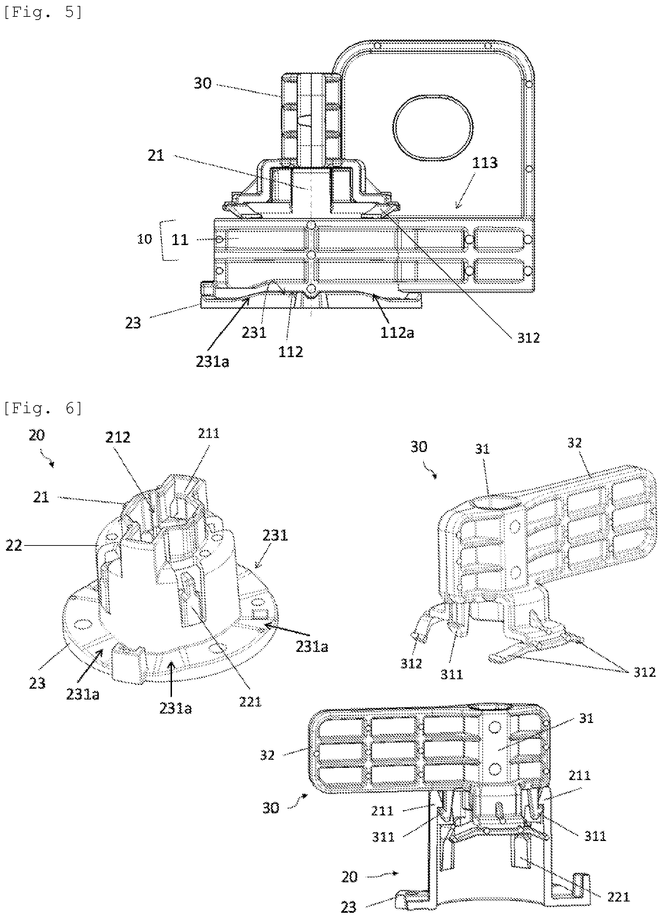

L'autre face 231 (appelée première face 231) de la collerette 23 est en contact contre une face inférieure 112 de la première portion 11. Lesdites faces 231,112 présentant des plans inclinés complémentaires 231a,112a (figure 5). Nous reviendrons plus loin sur l'utilité de ces plans inclinés 231a,112a.

Le verrou 30 du système de fixation supérieure 1 est solidaire de la tête supérieure 21 du logement 20 et établit un contact avec une face supérieure 113 de la première portion 11 du support 10. Avantageusement, le verrou 30 comprend un organe central 31 qui vient se fixer sur la tête supérieure 21 du logement 20 par clippage (figure 6). Pour cela, l'organe central 31 comprend par exemple deux crochets 311 symétriques par rapport à l'axe central de l'organe 31 ; ces crochets 311 sont configurés pour coopérer avec des encoches 211 aménagées dans des évidements de la tête supérieure 21 du logement 20. Les crochets 311 sont orientés vers l'extérieur comme cela est illustré sur la figure 6 pour garantir une haute tenue mécanique ; néanmoins, des crochets orientés vers l'intérieur pourraient être envisagés, avec des encoches et évidements adaptés au niveau de la tête supérieure 21.

Le verrou 30 est ainsi solidaire du logement 20 et prend appui sur la face supérieure 113 du support 10. Le logement 20, fixé au verrou 30 au niveau de sa tête supérieure 21 et plaqué contre la face inférieure 112 du support 10 par l'intermédiaire de la première face 231 de sa collerette 23, se trouve assemblé au support 10. Le verrou 30 et le logement 20 sont néanmoins capables d'effectuer un mouvement de rotation autour de l'axe z, dans la limite d'une certaine amplitude angulaire comme cela sera décrit plus loin.

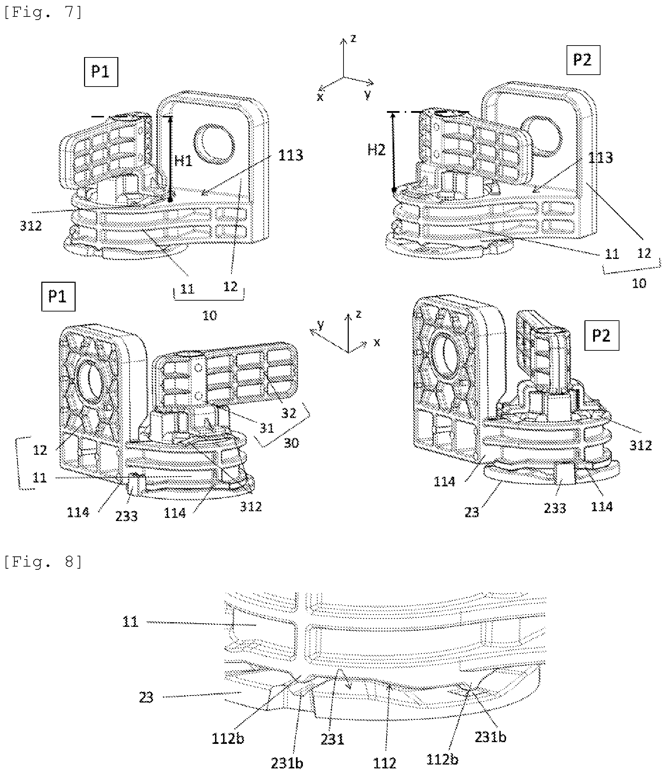

Le système de fixation supérieure 1 selon l'invention, avec ses support 10, logement 20 et verrou 30 assemblés entre eux, peut alors adopter deux positions P1, P2, illustrées sur la figure 7 :
- une position de livraison P1, dans laquelle le verrou 30 est à une première altitude H1, selon l'axe central z, par rapport à la face supérieure 113 de la première portion 11 du support 10, et
- une position de verrouillage P2, lorsque le verrou 30 effectue une rotation autour de l'axe central z, dans laquelle le verrou 30 est à une deuxième altitude H2 inférieure à la première altitude H1, du fait de la coopération entre les plans inclinés complémentaires 231a,112a.

Le système de fixation supérieure 1 est positionné et solidarisé à la broche 51 du module vibrant 50 et à l'élément de structure 60 dans sa position de livraison P1 ; puis il peut être placé en position de verrouillage P2 dans laquelle il vient comprimer le collet 52a du plot amortisseur 52 et compenser d'éventuels jeux dans l'empilement des pièces à solidariser (de l'élément de structure 60 jusqu'à la pièce mécanique qui maintient la face inférieure du module vibrant 50) : cela assure un maintien en étroit contact desdites pièces selon l'axe z.

Rappelons que le module 50 est amené à vibrer en fonctionnement, lorsqu'il est fixé à l'élément de structure 60, et que tous les jeux qui pourraient exister dans l'empilement des pièces sont susceptibles d'augmenter l'usure liée aux vibrations et de générer des nuisances sonores. Un maintien en étroit contact des pièces, grâce à ce système de fixation 1 à compensation de jeux est donc tout à fait avantageux.

Selon les caractéristiques du module vibrant 50 et son implantation (notamment selon le type de véhicule, dans le cas d'une application automobile), le jeu à compenser peut par exemple être attendu entre quelques dixièmes de millimètres et plusieurs millimètres, par exemple, il peut être de 0,5mm, 1mm, 1,5mm, 2mm, 3mm ou encore 4mm. Bien sûr le jeu à compenser n'est pas limité à cette gamme de valeurs et pourrait aller en-deçà ou bien au-delà de la gamme millimétrique, en dimensionnant le système de fixation en conséquence.

Dans la position de livraison P1, les plans inclinés complémentaires 231a,112a sont placés en vis-à-vis, c'est-à-dire que les points hauts de la face inférieure 112 de la première portion 11 du support 10 sont en vis-à-vis des points bas de la première face 231 de la collerette 23. La rotation du verrou 30 autour de l'axe z déplace les plans inclinés 231a,112a les uns par rapport aux autres et positionne les points hauts de la face inférieure 112 de la première portion 11 du support 10 en vis-à-vis des points hauts de la première face 231 de la collerette 23. Naturellement, la rotation du verrou 30 provoque donc un mouvement vertical (selon l'axe z), vers le bas, du logement 20 et du verrou 30 ; en d'autres termes, l'altitude de la tête supérieure 21 du logement 20, de même que l'altitude du verrou 30, par rapport à la face supérieure 113 de la première portion diminue dans la position verrouillée P2 (H2 < H1).

L'angle de rotation du verrou 30 peut par exemple être compris entre 30° et 90°. Comme cela est illustré sur la figure 7, le support 10 comprend avantageusement des premières butées de fin de course 114 configurées pour coopérer avec des deuxièmes butées 233 portées par le logement 20, de manière à limiter la rotation entre la position de livraison P1 et la position de verrouillage P2, à une amplitude angulaire déterminée. Les deuxièmes butées peuvent alternativement ou cumulativement être portées par le verrou 30.

Dans le système de fixation 1 selon l'invention, il est nécessaire que le verrou 30, en appui contre la face supérieure 113 de la première portion 11 en position de livraison P1, soit capable d'accommoder une diminution d'altitude en position de verrouillage P2.

Pour cela, un mode de réalisation avantageux prévoit que le verrou 30 comprend des pattes flexibles 312 via lesquelles il établit le contact avec la face supérieure 113 de la première portion 11. Comme cela est visible sur la figure 6, ces pattes flexibles 312 seront capables de s'affaisser et de se déformer pour accommoder le passage du verrou 30 de l'altitude H1, en position de livraison P1, à l'altitude H2 inférieure à H1, en position de verrouillage P2. Les pattes 312, bien que flexibles, présentent une certaine raideur, ce qui assure que les pièces du système de fixation 1 demeurent toujours en étroit contact entre elles, quelle que soit la position P1,P2.

D'autres modes de réalisation peuvent bien sûr être envisagés pour permettre au verrou 30 d'accepter une variation d'altitude par rapport à la face supérieure 113 de la première portion 11 du support 10, comme par exemple un arrangement de plans inclinés complémentaires.

Avantageusement, l'organe central 31 du verrou 30 présente une partie inférieure de forme polygonale, par exemple hexagonale, qui est emmanchée dans un orifice 212 de la tête supérieure 21 du logement 20, ledit orifice 212 présentant une forme complémentaire polygonale, par exemple hexagonale comme sur la figure 6. Cette liaison permet de supporter un couple de verrouillage élevé, lequel couple apparait lorsque le verrou 30 effectue une rotation pour passer de la position de livraison P1 à la position de verrouillage P2 (ou vice versa).

Le verrou 30 peut en outre comprendre un volet 32, qui facilite la préhension du verrou 30 pour effectuer la rotation de la position de livraison P1 à la position de verrouillage P2. Le volet 32 est préférentiellement configuré pour bloquer, ou tout au moins gêner, l'accès à la deuxième ouverture 121 en position de verrouillage P2 (figure 7). En d'autres termes, en position de verrouillage P2, le volet 32 bloque l'accès à la vis de fixation sur l'élément de structure 60. Au contraire, dans la position de livraison P1, le volet 32 est sensiblement parallèle à l'axe x, un outil peut donc aisément accéder à la deuxième ouverture 121 et réaliser le serrage de la vis pour la fixation sur l'élément de structure 60.

Optionnellement, la partie supérieure de l'organe central 31 du verrou 30 présente une forme polygonale, par exemple hexagonale, de manière à autoriser l'utilisation d'une clé pour manoeuvrer le verrou 30 en rotation. Cette option est mise en oeuvre par exemple en l'absence du volet 32, ou en présence du volet 32 au cas où le couple de verrouillage serait trop important et que la seule préhension du volet 32 ne suffise pas à opérer la rotation du verrou 30.

De manière avantageuse, le corps central 22 du logement 20 comprend des bras flexibles 221 s'étendant selon l'axe central z et aptes à fléchir radialement, comme illustré sur la figure 6. Ces bras flexibles 221 sont destinés à être poussés vers l'extérieur lorsque le plot amortisseur 52 est inséré en force dans le corps central 22 : cela permet de plaquer les bras 221 contre les parois internes de la première portion 11, dans la première ouverture 111 et d'assurer un contact étroit entre la première portion 11 et le corps central 22 du logement 20, malgré d'éventuelles incertitudes de côtes. Cette configuration de contact étroit, dans le plan (x,y), est également favorable pour limiter usure et bruits liés à la vibration en fonctionnement du module 50.

De manière également avantageuse, la première face 231 de la collerette 23 et la face inférieure 112 de la première portion 11 du support 10 comportent respectivement des encoches 231b et des pions 112b complémentaires, pour stabiliser les positions de livraison P1 et de verrouillage P2 (figure 8).

Bien entendu, l'invention n'est pas limitée aux modes de mise en oeuvre et exemples décrits, et on peut y apporter des variantes de réalisation sans sortir du cadre de l'invention tel que défini par les revendications.

## Revendications

1. Système de fixation supérieure (1) d'un module vibrant (50) sur un élément de structure (60), comprenant :
- un support (10) comportant une première portion (11) s'étendant selon un plan principal (x,y) et destinée à être accouplée à une broche (51) du module vibrant (50), et une deuxième portion (12) destinée à être solidarisée à l'élément de structure, la première portion (11) présentant une première ouverture (111) d'axe central (z) et la deuxième portion présentant une deuxième ouverture (121),
- un logement (20) comportant un corps central (22) de forme générale cylindrique, une tête supérieure (21) et une collerette inférieure (23), le corps central (22) étant disposé dans la première ouverture (111) et étant destiné à accueillir la broche (51) entourée d'un plot amortisseur (52), une première face (231) de la collerette (23) étant en contact contre une face inférieure (112) de la première portion (11), lesdites faces (231,112) présentant des plans inclinés complémentaires (231a,112a),
- un verrou (30) solidaire de la tête supérieure (21) et établissant un contact avec une face supérieure (113) de la première portion (11),
le système de fixation (1) étant apte à adopter deux positions :
- une position de livraison (P1) dans laquelle le verrou (30) est à une première altitude (H1), selon l'axe central (z), par rapport à la face supérieure (113) de la première portion (11) du support (10), et
- une position de verrouillage (P2), lorsque le verrou (30) effectue une rotation autour de l'axe central (z), dans laquelle le verrou (30) est à une deuxième altitude (H2) inférieure à la première altitude (H1), du fait de la coopération entre les plans inclinés complémentaires.

2. Système de fixation (1) selon la revendication précédente, comprenant une bague (40) disposée dans la deuxième ouverture (121).

3. Système de fixation (1) selon l'une des revendications précédentes, dans lequel le verrou (30) comprend un organe central (31) fixé sur la tête supérieure (21) du logement (20) par clippage.

4. Système de fixation (1) selon l'une des revendications précédentes, dans lequel le verrou (30) comprend un organe central (31) emmanché dans un orifice (212) hexagonal de la tête supérieure (21) du logement (20), de manière à supporter le couple de verrouillage lorsque le verrou (30) effectue une rotation pour passer de la position de livraison (P1) à la position de verrouillage (P2).

5. Système de fixation (1) selon l'une des revendications précédentes, dans lequel le verrou (30) comprend un volet (32) configuré pour bloquer l'accès à la deuxième ouverture (121) en position de verrouillage (P2).

6. Système de fixation (1) selon l'une des revendications précédentes, dans lequel le verrou (30) comprend des pattes flexibles (312) via lesquelles il établit le contact avec la face supérieure (113) de la première portion (11).

7. Système de fixation (1) selon l'une des revendications précédentes, dans lequel le corps central (22) du logement (20) comprend des bras flexibles (221) s'étendant selon l'axe central (z) et aptes à fléchir radialement.

8. Système de fixation (1) selon l'une des revendications précédentes, dans lequel la première face (231) de la collerette (23) et la face inférieure (112) de la première portion (11) comportent respectivement des encoches (231b) et des pions (112b) complémentaires, pour stabiliser les positions de livraison (P1) et de verrouillage (P2).

9. Système de fixation (1) selon l'une des revendications précédentes, dans lequel le support (10) comprend des premières butées (114) de fin de course configurées pour coopérer avec des deuxièmes butées (233) portées par le logement (20) et/ou par le verrou (30), de manière à limiter la rotation entre la position de livraison (P1) et la position de verrouillage (P2).

10. Système de fixation (1) selon l'une des revendications précédentes, dans lequel le support (10), le logement (20) et le verrou (30) sont formés dans une matière plastique, par exemple du polyamide PA66.

11. Ensemble (2) de fixation pour le maintien en partie supérieure d'un module vibrant (50) sur un élément de structure (60), comprenant deux systèmes de fixation supérieure (1) selon l'une des revendications précédentes, et dans lequel :
- les deux supports (10) sont symétriques par rapport à un plan normal au plan principal (x,y),
- les deux logements (20) et les deux verrous (30) sont identiques.

## Patentansprüche

1. System (1) für eine obere Befestigung eines Vibrationsmoduls (50) an einem Strukturelement (60), umfassend:
- einen Träger (10), der einen ersten Abschnitt (11), der sich entlang einer Hauptebene (x, y) erstreckt und dazu bestimmt ist, mit einem Stift (51) des Vibrationsmoduls (50) gekoppelt zu werden, und einen zweiten Abschnitt (12) aufweist, der dazu bestimmt ist, mit dem Strukturelement fest verbunden zu werden, wobei der erste Abschnitt (11) eine erste Öffnung (111) einer zentralen Achse (z) vorweist und der zweite Abschnitt eine zweite Öffnung (121) vorweist, - ein Gehäuse (20), das einen zentralen Körper (22) von allgemein zylindrischer Form, einen oberen Kopf (21) und einen unteren Flansch (23) aufweist, wobei der zentrale Körper (22) in der ersten Öffnung (111) angeordnet ist und dazu bestimmt ist, den Stift (51) aufzunehmen, der von einem Dämpfungskontaktstück(52) umgeben ist, wobei eine erste Fläche (231) des Flansches (23) eine untere Fläche (112) des ersten Abschnitts (11) berührt, wobei die Flächen (231, 112) komplementäre geneigte Ebenen (231a, 112a) aufweisen,
- eine Verriegelung (30), die mit dem oberen Kopf (21) fest verbunden ist und eine Berührung mit einer oberen Fläche (113) des ersten Abschnitts (11) herstellt,
wobei das Befestigungssystem (1) geeignet ist, um zwei Positionen einzunehmen:
- eine Lieferungsposition (P1), in der sich die Verriegelung (30) in einer ersten Höhe (H1) entlang der zentralen Achse (z) relativ zu der oberen Fläche (113) des ersten Abschnitts (11) des Trägers (10) befindet, und
- eine Verriegelungsposition (P2), wenn die Verriegelung (30) eine Drehung um die zentrale Achse (z) herum bewirkt, in der sich die Verriegelung (30) auf einer zweiten Höhe (H2) befindet, die niedriger als die erste Höhe (H1) ist, aufgrund des Zusammenwirkens zwischen den komplementären geneigten Ebenen.

2. Befestigungssystem (1) nach dem vorstehenden Anspruch, umfassend einen Ring (40), der in der zweiten Öffnung (121) angeordnet ist.

3. Befestigungssystem (1) nach einem der vorstehenden Ansprüche, wobei die Verriegelung (30) ein zentrales Glied (31) umfasst, das durch Einklipsen an dem oberen Kopf (21) des Gehäuses (20) befestigt ist.

4. Befestigungssystem (1) nach einem der vorstehenden Ansprüche, wobei die Verriegelung (30) ein zentrales Glied (31) umfasst, das in eine sechseckige Mündung (212) des oberen Kopfes (21) des Gehäuses (20) eingepasst ist, um das Verriegelungsmoment zu tragen, wenn die Verriegelung (30) eine Drehung zum Übergehen von der Lieferungsposition (P1) in die Verriegelungsposition (P2) bewirkt.

5. Befestigungssystem (1) nach einem der vorstehenden Ansprüche, wobei die Verriegelung (30) eine Klappe (32) umfasst, die zum Blockieren des Zugangs zu der zweiten Öffnung (121) in der Verriegelungsposition (P2) konfiguriert ist.

6. Befestigungssystem (1) nach einem der vorstehenden Ansprüche, wobei die Verriegelung (30) flexible Laschen (312) aufweist, über die es die Berührung mit der oberen Fläche (113) des ersten Abschnitts (11) herstellt.

7. Befestigungssystem (1) nach einem der vorstehenden Ansprüche, wobei der zentrale Körper (22) des Gehäuses (20) flexible Arme (221) umfasst, die sich entlang der zentralen Achse (z) erstrecken und geeignet sind, um radial gebogen zu werden.

8. Befestigungssystem (1) nach einem der vorstehenden Ansprüche, wobei die erste Fläche (231) des Flansches (23) und die untere Fläche (112) des ersten Abschnitts (11) jeweils Kerben (231b) und komplementäre Zapfen (112b) zum Stabilisieren der Lieferungs- (P1) und der Verriegelungsposition (P2) aufweisen.

9. Befestigungssystem (1) nach einem der vorstehenden Ansprüche, wobei der Träger (10) erste Endanschläge (114) umfasst, die zum Zusammenwirken mit zweiten Anschlägen (233) konfiguriert sind, die durch das Gehäuse (20) und/oder durch die Verriegelung (30) gestützt werden, um die Drehung zwischen der Lieferungsposition (P1) und der Verriegelungsposition (P2) zu begrenzen.

10. Befestigungssystem (1) nach einem der vorstehenden Ansprüche, wobei der Träger (10), das Gehäuse (20) und die Verriegelung (30) aus einem Kunststoffmaterial, beispielsweise Polyamid PA66, ausgebildet sind.

11. Befestigungsanordnung (2) zum Halten eines Vibrationsmoduls (50) in dem oberen Teil an einem Strukturelement (60), umfassend zwei Systeme (1) für die obere Befestigung nach einem der vorstehenden Ansprüche, und wobei:
- die zwei Träger (10) relativ zu einer Ebene normal zu der Hauptebene (x, y) symmetrisch sind,
- die zwei Gehäuse (20) und die zwei Verriegelungen (30) identisch sind.

## Claims

1. System (1) for upper attachment of a vibrating module (50) on a structural element (60), comprising:
- a holder (10) comprising a first portion (11) extending along a main plane (x, y) and intended to be coupled to a pin (51) of the vibrating module (50), and a second portion (12) intended to be secured to the structural element, the first portion (11) having a first opening (111) which has a central axis (z) and the second portion having a second opening (121),
- a housing (20) comprising a central body (22) of generally cylindrical shape, an upper head (21) and a lower flange (23), the central body (22) being arranged in the first opening (111) and being intended to accommodate the pin (51) which is surrounded by a damping pad (52), a first face (231) of the flange (23) being in contact with a lower face (112) of the first portion (11), said faces (231, 112) having complementary inclined planes (231a, 112a),
- a lock (30) secured to the upper head (21) and making contact with an upper face (113) of the first portion (11),
the attachment system (1) being able to adopt two positions:
- a delivery position (P1), wherein the lock (30) is at a first altitude (H1), along the central axis (z), with respect to the upper face (113) of the first portion (11) of the holder (10), and
- a locking position (P2), when the lock (30) rotates about the central axis (z), wherein the lock (30) is at a second altitude (H2) lower than the first altitude (H1), due to the interaction between the complementary inclined planes.

2. Attachment system (1) according to the preceding claim, comprising a ring (40) arranged in the second opening (121).

3. Attachment system (1) according to either of the preceding claims, wherein the lock (30) comprises a central member (31) attached to the upper head (21) of the housing (20) by clipping.

4. Attachment system (1) according to any of the preceding claims, wherein the lock (30) comprises a central member (31) fitted into a hexagonal aperture (212) in the upper head (21) of the housing (20), so as to withstand the locking torque when the lock (30) rotates in order to move from the delivery position (P1) to the locking position (P2).

5. Attachment system (1) according to any of the preceding claims, wherein the lock (30) comprises a flap (32) designed to block access to the second opening (121) in the locking position (P2).

6. Attachment system (1) according to any of the preceding claims, wherein the lock (30) comprises flexible tabs (312) via which it makes contact with the upper face (113) of the first portion (11).

7. Attachment system (1) according to any of the preceding claims, wherein the central body (22) of the housing (20) comprises flexible arms (221) that extend along the central axis (z) and are able to bend radially.

8. Attachment system (1) according to any of the preceding claims, wherein the first face (231) of the flange (23) and the lower face (112) of the first portion (11) comprise complementary notches (231b) and pegs (112b), respectively, to stabilize the delivery (P1) and locking (P2) positions.

9. Attachment system (1) according to any of the preceding claims, wherein the holder (10) comprises first end-of-travel stops (114) designed to interact with second stops (233) supported by the housing (20) and/or by the lock (30), so as to limit the rotation between the delivery position (P1) and the locking position (P2).

10. Attachment system (1) according to any of the preceding claims, wherein the holder (10), the housing (20) and the lock (30) are formed by a plastics material, for example polyamide PA66.

11. Attachment assembly (2) for holding the upper part of a vibrating module (50) on a structural element (60), comprising two upper attachment systems (1) according to any of the preceding claims, and wherein:
- the two holders (10) are symmetrical with respect to a plane normal to the main plane (x, y),
- the two housings (20) and the two locks (30) are identical.
